(19) Europäisches Patentamt
European Patent Office
Office européen des brevets

(11) Veröffentlichungsnummer : **0 108 210**
**B1**

(12) # EUROPÄISCHE PATENTSCHRIFT

(45) Veröffentlichungstag der Patentschrift : **19.08.87**

(21) Anmeldenummer : **83108511.3**

(22) Anmeldetag : **30.08.83**

(51) Int. Cl.⁴ : **C 03 C 3/00**, C 07 F 7/18, C 07 F 5/02, C 07 F 7/22, C 07 F 9/02, C 08 G 77/04, C 09 C 1/30, C 09 D 1/04

(54) **Glasartiges Material und Verfahren zur Herstellung desselben.**

(30) Priorität : **07.10.82 DE 3237140**

(43) Veröffentlichungstag der Anmeldung : **16.05.84 Patentblatt 84/20**

(45) Bekanntmachung des Hinweises auf die Patenterteilung : **19.08.87 Patentblatt 87/34**

(84) Benannte Vertragsstaaten : **BE CH FR GB IT LI**

(56) Entgegenhaltungen :
**DD-A- 94 354**
**DE-A- 1 493 800**
**DE-A- 2 511 344**
**DE-A- 3 000 118**
**DE-B- 2 454 111**

(73) Patentinhaber : **Schott Glaswerke**
**Hattenbergstrasse 10**
**D-6500 Mainz (DE)**
**BE CH FR IT LI**
**Carl-Zeiss-Stiftung trading as SCHOTT GLASWERKE**
**Hattenbergstrasse 10**
**D-6500 Mainz 1 (DE)**
**GB**

(72) Erfinder : **Gliemeroth, Georg, Dr. Dipl.-Ing.**
**Sertoriusring 52**
**D-6500 Mainz-Finthen (DE)**
Erfinder : **Ross, Ludwig, Dr. Dipl.-Chem.**
**Bahnhofstrasse 15**
**D-6501 Klein-Winternheim (DE)**
Erfinder : **Dräger, Martin, Dr. Prof. rer.nat.**
**Platanenstrasse 32**
**D-6094 Bischofheim (DE)**
Erfinder : **Flörsheimer, Andreas**
**Taubenstrasse 7**
**D-6090 Rüsselsheim (DE)**

(74) Vertreter : **Schmitz, Waldemar, Dipl.-Ing. et al**
**Büro Dr. J. Rasper Bierstadter Höhe 22**
**D-6200 Wiesbaden (DE)**

**EP 0 108 210 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung bezieht sich auf ein neuartiges Material, das Eigenschaften von Gläsern und solche von Kunststoffen miteinander vereinigt.

Stand der Technik

Die heutigen Vorstellungen von der Struktur der Gläser sind gut dargelegt im Buch von H. Scholze, « Glas : Natur, Struktur und Eigenschaften », 2. Auflage, Springer-Verlag, Berlin, 1977. Der Netzwerk-Hypothese von Zachariasen folgend sind die Silicat-Gläser aus $SiO_4$-Tetraedern aufgebaut, die mindestens über drei Ecken mit den Nachbar-Tetraedern verknüpft sind zu einem dreidimensionalen Netzwerk. Für Bor- und Phosphor-Konfigurationen, gleichgültig ob sie gemeinsam und gemischt mit $SiO_2$ im Glas vorliegen oder allein das Netzwerk aufbauen, gilt Entsprechendes.

Ein Sauerstoff-Ion, das zwei Tetraeder miteinander verknüpft, wird als brückenbildender Sauerstoff bezeichnet; ein solches, das nicht zur Vernetzung durch Brückenbildung beiträgt, als nichtbrückenbildender Sauerstoff. Der Einbau von einwertigen Komponenten, z. B. Alkali-Ionen in ein Glas, läßt aus brückenbildenden nicht-brückenbildende Sauerstoffe werden ; die Vernetzung des Glases wird schwächer, das Glas wird instabiler.

Schon lange war man bemüht, mindestens in der Oberfläche Bindungen vom anorganischen Netzwerk zu organischen Molekülen zu knüpfen. Als grundlegende Zusammenfassung kann das Buch von L. Holland, « The Properties of Glass Surfaces » (Chapman & Hall, 1964, London) angesehen werden, das in Kapitel 8 die Bindung von Polymeren und sonstigen organischen Verbindungen an Glasoberflächen beschreibt. Diese organischen Verbindungen sind jedoch ausschließlich an der Glasoberfläche lokalisiert. Es handelt sich dabei meist um

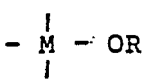

Gruppen.

Die Herstellung von anorganischem Glas aus organischen und anorganischen Lösungen ist ebenfalls bereits beschrieben. Die DE-C 1 596 839 beschreibt ein Verfahren, nach dem die Hauptbestandteile des späteren Glases in Form einer flüssigen oder gelösten organischen Verbindung angesetzt, mit anderen Bestandteilen vermischt, hydrolysiert und geliert werden, worauf die Masse durch Wärmeeinwirkung in einen oxidischen Formkörper umgewandelt wird. Wie vielfältig dabei die Möglichkeiten der anwendbaren organischen Verbindungen sind, zeigt der Aufsatz von Dislich (Angew. Chemie 83 (1971) 428-435) über neue Wege zur Darstellung von Mehrkomponentenoxidgläsern. In diesen Arbeiten wird aber das Ziel angestrebt und erreicht, die organischen Komponenten bei der Darstellung des Glases aus dem Volumen zu entfernen, also ein rein anorganisches Endprodukt zu erstellen.

Copolykondensate, bestehend aus Siliconeinheiten und als Netzwerkbildner in Frage kommenden Metalloxiden ($TiO_2$, $B_2O_3$, $Al_2O_3$ und $P_2O_5$) sind in dem Buch von M.F. Lappert und G.L. Leigh « Developments in Inorganic Polymer Chemistry », Elsevier Publishing Company, Amsterdam 1962, Kapitel 84 beschrieben.

Copolymere mit Al und der als Netzwerkwandler zu bezeichnenden trifunktionellen Silesquioxaneinheit

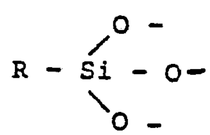

(R = $CH_3$, Ph ; Et) werden von K.A. Andrianow und anderen Mitarbeitern dargestellt, indem sie Verbindungen des Typs

$$[R—Si\ (OH)_2]_3Al$$

entweder durch Cohydrolyse der Organotrichlorsilane mit $Al_2(SO_4)_3$ im alkalischen Medium oder durch Reaktion der Na-Salze der Monoorganosiliconate [R $Si(OH)_2ONa$] mit $AlCl_3$ synthetisierten und diese durch thermische Behandlung (200-500 °C) zu hochpolymeren, spröden Harzen kondensierten, die sich jedoch nicht unterhalb ihrer Zersetzungstemperaturen schmelzen bzw. sintern ließen, s. z. B. K. A. Andrianow u. A. A. Zhdanov, Doklady Akad. Nauk S.S.S.R., 114, (1957) 1005,

K. A. Andrianov et al., Izvest. Akad. Nauk S.S.S.R., Otdel. Khim. Nauk (1959) 1760

K. A. Andrianov et al., Zhur. Obshohei Rhim. 29 (1959) 1281.

Avilova und Mitarbeiter (Avilova, T. P., et al, Izu. Akad. Nauk S.S.S.R. Neorg. Mater, 1968, 4 (12) 2188-2190) stellten Metallosiloxane der Formel

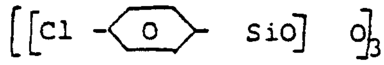

Al durch Cohydrolyse von Cl

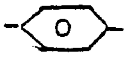

$SiCl_3$ mit $AlCl_3$ und solche der Formel

$[-O-(Cl_xO_6H_{5-x})-SiO_{3/2})_m-M]_n$ durch Kondensation der Hydrolyseprodukte von Cl

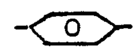

$SiCl_3$ mit $AlCl_3$, $FeCl_3$, $CrCl_3$ u. a. dar. Sie erhielten in organischen Lösungsmitteln lösliche Polymere. Durch Abdampfen dieser Lösungen konnten lediglich harte, transparente Filme erhalten werden. Auch hier war es nicht möglich, die Polymeren unterhalb ihrer Zersetzungstemperatur zu schmelzen.

Bei den bisher beschriebenen Copolykondensaten, bestehend aus Silesquioxaneinheiten $R-SiO_{3/2}$ und Oxiden von Netzwerkbildnern und Zwischenoxiden, handelt es sich um hochpolymere Verbindungen, von denen man allenfalls dünne glasige Schichten erhalten kann, die sich jedoch nicht in irgendeiner Form aufschmelzen lassen, ohne daß die organische Struktureinheit zerstört wird.

Untersuchungen zur Hydrolyse von monomeren Kieselsäure-Estern und ihren Derivaten führten zur Synthese von sogenannten Gel-Gläsern, bestimmten Siliconen oder von Mischprodukten aus beiden (Schmidt, H., Kaiser, A., « Untersuchung zur Hydrolyse von Kieselsäure-Derivaten », Glastechn. Ber. 65 (1981) 338-342). Es handelt sich dabei um Mischprodukte auf der Basis von Siliconen und Gläsern, die unter thermischer Behandlung meist über 500 °C bei zusätzlichem Druck (Autoklav-Behandlung) erzeugt werden. Dabei ergeben sich

$$-\overset{|}{\underset{|}{M}}-OR-$$

Konfigurationen.

Allgemeine Beschreibung der Erfindung

Wie bereits erwähnt wurde, hat die vorliegende Erfindung ein glasähnliches Material zum Ziel, in dem einige Eigenschaften der Gläser und bestimmter Kunststoffe kombiniert sind. Dies wird erfindungsgemäß dadurch erreicht, daß in glasiges Netzwerk organische Reste eingebaut werden. Es wurde nämlich gefunden, daß sich der glasige Charakter des Netzwerkes erst deutlich verändert, wenn große Anteile an organischem Material (in relativ großen Dimensionen) eingebaut werden.

Werden nur organische Reste bis zu einer bestimmten Größe eingebaut, so finden sie im anorganischen Glasnetzwerk Platz. Sogar etwas größere Gruppen lassen sich noch einbauen durch Ersatz von Endgruppen, was zur Aufweitung des Netzwerkes führen kann. Erst wenn die Dimensionen der eingebauten Gruppen in die Größenordnung der Lichtwellenlängen gelangen, findet ein Übergang vom charakteristischen anorganischen Glas zu mehr kunststoffähnlichem Material statt ; das Material verliert seine glasartigen Eigenschaften, es wird z. B. undurchsichtig.

Besonders gut erkennt man die dank der Lichtwellen angezeigte Begrenzung der Erfindung in einem Versuch, bei dem Borosilikatglas, dessen Zusammensetzung so gewählt wurde, daß es spinodal entmischt, getempert und ausgelaugt wird und die so entstandenen, untereinander verbundenen Hohlräume mit organischem Material gefüllt werden. Wenn die Querschnitte der Hohlräume kleiner als die Wellenlänge des sichtbaren Lichtes sind, bleibt das Material durchsichtig, anderenfalls wird es milchig trüb.

Das eigentliche Ziel der Erfindung ist es also, einzelne organische Reste in dem Glasnetzwerk gebunden unterzubringen, wobei die eingebauten organischen Reste nicht größer als die Wellenlänge des sichtbaren Lichtes sind und gleichmäßig über das gesamte Material verteilt sind. Dadurch bleibt der glasartige Charakter erhalten, aber die eingebauten organischen Reste vermitteln gleichzeitig Eigenschaften des organischen Materials.

Die deutlich geringere Dichte, die Veränderung der elastischen Eigenschaften und die Härte beim Schleifen und Polieren zusammen mit der Durchsichtigkeit des Materials, sind Beispiele für gewünschte Eigenschaftskombinationen.

Es sei hier hervorgehoben, daß gemäß der Erfindung keine Alkoxygruppen $\equiv M-OR$, sondern

metallorganische Gruppen

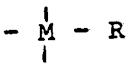

eingebaut werden. Dies grenzt die Erfindung gegen die Alkoxygruppen enthaltenden Materialien ab.

Von den Silikonen unterscheiden sich die erfindungsgemäßen Materialien dadurch, daß wie im üblichen Glas Netzwerkwandler (Kationen) und Netzwerkbildner (komplexe Anionen) vorhanden sind.

Beispiele für organische Reste, die eingebaut werden können, sind $—CH_3$, $—CH_2X$, $—CHX_2$, (X = Hal., —OH bzw. = O),

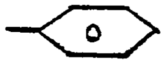 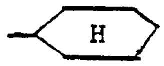 oder 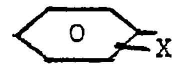

Durch Einbau solcher organischer Reste ist es z. B. möglich, ein Material zu schaffen, dessen Oberfläche mit weiteren organischen Gruppen belegt werden kann. Auch ist es möglich, daß man an in dem neuen Material enthaltenen Silesquioxaneinheiten Radikalreaktionen, bzw. $S_N$- und $S_e$-Reaktionen (im Falle eines aromatischen Restes) unter Erhalt der Struktur des Materials vornehmen kann. Bei diesen organischen Gruppen kann es sich beispielsweise um die Phenyl-Gruppe oder um die Cyclohexyl-Gruppe handeln.

Die erfindungsgemäßen Materialien können Verwendung finden z. B. als hydrophobe Werkstoffe, selbstschmierende Werkstoffe, Bremsbeläge, beschlagungsfreie Brillengläser und als vieles andere mehr.

Spezifische Beschreibung der Erfindung

Es wurde gefunden, daß sich in ein anorganisches Glasnetzwerk organische Reste (Radikale, Molekülteile, Atomgruppen) einbauen lassen, wobei die eingebauten organischen Rest nicht größer als die Wellenlänge des sichtbaren Lichtes sind und gleichmäßig über das gesamte Material verteilt sind und wobei ein Teil der nicht abgesättigten Bindungen dieses Netzwerks durch diese organischen Reste abgesättigt ist.

Als geeignete Gläser erwiesen sich beispielsweise die in Tabelle 1 aufgeführten Gläser. Sie sind charakterisiert durch eine Aufteilung von Netzwerkbildnern und -wandlern, wobei als Netzwerkbildner NB die Komponenten $SiO_2$, $B_2O_3$, $P_2O_5$, $GeO_2$, $SnO_2$ und in gewissem Umfang auch $Al_2O_3$ gezählt werden, während als Netzwerkwandler NW alle Erdalkali- und Alkalioxide gezählt werden. Die übrigen anorganischen Grundglaskomponenten werden als intermediär nicht gezählt, was allerdings eine grobe Vereinfachung ist.

Für die erfindungsgemäß verwendbaren Gläser gilt nun :

$$V = NW/NB = 0{,}02 \text{ bis } 1{,}30.$$

Dem $SnO_2$ kommt erfindungsgemäß insofern eine Rolle zu, als es als Netzwerkbildner mit höherer Koordinationszahl als vier fungiert.

Erfindungsgemäß geeignete organische Reste wurden bereits genannt.

Als organische, an Silesquioxanoeinheiten gebundene Reste, die eine thermische Nachbehandlung und Bearbeitung des Materials erlauben, können $—CH_3$, $—CH_2X$, $—CHX_2$, (X = Halogen, —OH, bzw. = O),

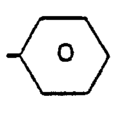 , 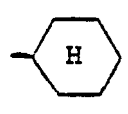 , 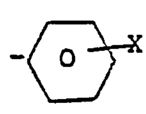

(X = Halogen o. ä.) verwendet werden. Solche Reste gestatten eine Weiterverarbeitung des Materials im Temperaturbereich von 500°-570° unter Erhalt der ≡Si-C-Bindungseinheiten. Als Ausgangskomponenten können hierbei die entsprechenden Trichlorsilane verwendet werden, wobei allerdings auch ein oder mehrere X-Atome durch Wasserstoff ersetzt sein können. Die Synthese dieser Ausgangsverbindungen und ihre weitere Umsetzung zu Derivaten der Formel $R—SiX_3$ mit X = —OR, —OAc sind in dem Buche von W. Noll « Chemie und Technologie der Silicone », 2. Auflage, 1968 Weinheim ausführlich beschrieben.

Als Ausgangsstoffe für den Einbau der organischen Struktureinheit R—Si in das Glas können die trifunktionellen Monomeren $R—SiX_3$ (mit X = Hal, H, —OR', —O—Ac) verwendet werden. Weitere mögliche Komponenten sind die Salze der Organo-Kieselsäure $R—SiO_3M_{3/x}$ (M = Alkali bei x = 1 oder Erdalkali bei x = 2). Weiterhin können Silesquioxanocopolykondensate mit Oxiden des B, Sn, Al, P oder

Ti als Ausgangsmaterial herangezogen werden. Weitere Ausgangskomponenten stellen niedermolekulare, sphärozyklische Silesquioxane der Formel $(PhSiO_{3/2})_{6.8}$ dar. Ihre Herstellung ist in dem Artikel von M. M. Sprung (J. Polymer Sci. 1958, 28, 17) beschrieben.

Um diese organischen Reste im Glasnetzwerk homogen zu binden, müssen erfindungsgemäß gewisse Bedingungen eingehalten werden. Es ist einerseits erforderlich, den Bindungsbereich (Übergang von organischem Rest zu anorganischem Netzwerk) zu konditionieren. Hierzu werden beispielsweise in einem Zwischenschritt an die organischen Reste anorganische Netzwerkbausteine angebaut. Es wurden zum Beispiel niedermolekulare Copolymere der Formel

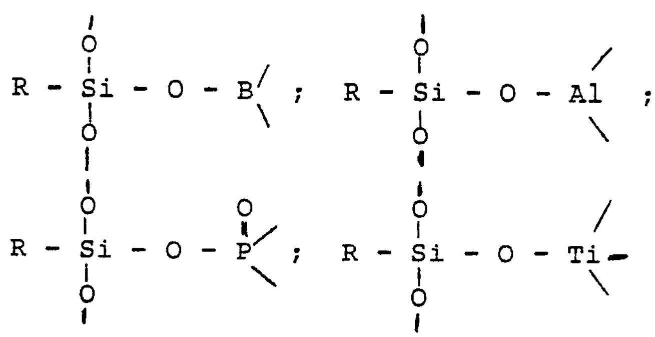

durch entsprechende Kondensationsreaktionen bzw. $S_N$-Reaktionen in einer Weise dargestellt, daß das entstandene Material vor Abschluß der Polykondensation schon weiterverarbeitet, bzw. die Copolykondensation vor dem vollständigen Umsatz abgebrochen wurde, um möglichst niedermolekulare Einheiten zu erhalten.

Zum anderen ist es erfindungsgemäß erforderlich, große Polymermoleküle des metallorganischen Ausgangsmaterials so zu zerlegen, daß Reste entstehen, die leicht in das Glasnetzwerk auf eine solche Weise eingebunden werden, daß die eingebauten organischen Reste kleiner als die Wellenlänge des Lichtes und homogen über das anorganische Netzwerk verteilt sind.

Durch den Einbau der organischen Reste wird das anorganische Netzwerk im allgemeinen aufgeweitet. Dabei sind diese organischen Reste über eine oder mehrere metallorganische Bindungen (z. B.

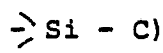 )

an das Netzwerk fixiert. Die nicht an das Netzwerk gebundenen, übrigen Atome des organischen Restes zeigen nur Van-der-Waals-Wechselwirkungen mit dem umhüllenden anorganischen Gerüst. Um homogenes Glas zu erhalten, ist es wichtig, daß diese organischen Gruppen in ihrer Ausdehnung begrenzt sind. Organische Gruppen tragende, makromolekulare Einheiten in der Größenordnung der Lichtwellenlänge führen zu getrübten Gläsern.

Die Aufspaltung makromolekularer Zwischenstufen kann durch thermische Depolymerisation, alkalische Depolymerisation und Depolymerisation mittels Lewis-Säuren bewerkstelligt werden. So können beispielsweise frisch hergestellte Hydrolyseprodukte der Monoorganosilane mit starken Alkalien, wie KOH, NaOH, $Ca(OH)_2$ oder Lewissäuren, wie $AlCl_3$, $SnCl_4$, $TiCl_4$ oder $H_3PO_4$ teilweise depolymerisiert und dann weiter umgesetzt werden. Die Lewissäuren werden durch Hydrolyse und Kondensation direkt zu weiteren Netzwerkbildnern umgesetzt.

Für den Einbau dieser organischen Reste (Radikale, Molekülteile oder Atomgruppen) in das Glasnetzwerk sind verschiedene Wege möglich.

Ein prinzipiell einfacher Weg ist die Verwendung einer niedrig schmelzenden Glaszusammensetzung mit einer Viskosität von $< 100$ dPa · s. bei 400 °C-500 °C. In einer solchen Glasschmelze lassen sich solche organischen Reste lösen, deren thermische Stabilität ausreichend hoch ist.

Über die thermische Stabilität von

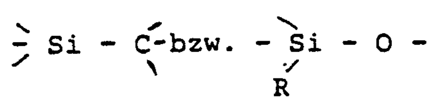
bzw.

Bindungen in Silesquioxanen sind im Gegensatz zu Diorganosiloxanen bisher offenbar wenige Untersuchungen durchgeführt worden. P. O. George und P. O. Zemany in FR-A-1 174 288 haben Methylsilesquioxan-Polymere $(CH_3SiO_{3/2})_n$ im Temperaturbereich von 250-600 °C bei Drücken über 100 Torr (133 mbar) untersucht und fanden Abbauprodukte, wie TMS, Hexamethyldisiloxan, $CH_4$, CO, $CO_2$ u. a...

Es wurde gefunden, daß polymere Arylsilesquioxane unter Schutzgas (Ar, $N_2$) sich unter C-Si-Bindungsspaltung ab 500° zersetzen. Unter normaler Atmosphäre erfolgt bereits bei 490° oxidativer

Abbau des organischen Restes unter Si-C-Bindungsspaltung. Methylsilesquioxane beginnen sich ab 570° unter Schutzgas merklich unter C-Si-Bindungsspaltung zu zersetzen. Unter normaler Atmosphäre findet ein Abbau des organischen Restes ab 500° statt. Hochpolymere Silesquioxane lassen sich nicht unterhalb ihrer Zersetzungstemperatur schmelzen. Salze des Typs R—Si(OM)$_3$ sind thermisch bis zu 1 000 °C stabil.

Eine andere Möglichkeit der Darstellung des erfindungsgemäßen Materials besteht in der Nutzung des in der DE-C-1 596 839 beschriebenen Verfahrens zur Herstellung anorganischer Gläser aus organischen Lösungen mit nachträglicher Wärmebehandlung oder ohne nachträgliche Wärmebehandlung. Hierbei ist darauf zu achten, daß die organischen Reste (Molekülteile, Radikale oder Atomgruppen) nicht in anorganisches Material überführt werden. Dies kann beispielsweise dadurch erreicht werden, daß einzelne organische Reste vor ihrem Einbau in das anorganische Glas mit Netzwerkbildnern umgesetzt werden, wobei Verbindungsgruppen entstehen, die den organischen Rest so abschirmen, daß er beim späteren Einbau in das anorganische Netzwerk nicht gestört wird.

Es wird somit ein spezielles Ausgangsmaterial hergestellt, das einem erfindungsgemäß geeigneten Glasgemenge vor dessen Schmelze zugesetzt wird.

Weitere Darstellungsverfahren sind möglich. So kann durch Copolykondensation ein Teil des späteren Mischnetzwerkes aus anorganischem und organischem Material vorweg dargestellt werden. Auch können kristalline Phasen mit herangezogen werden, sowohl bei den genannten Ausgangsmaterialien als auch bei der endgültigen Darstellung der erfindungsgemäßen Materials.

Weitere Ausgestaltungen der Erfindung ergeben sich aus den Ansprüchen. Die Erfindung wird durch die nachfolgenden Ausführungsbeispiele näher erläutert.

## Beispiel 1

In einen mit Rückflußkühler mit aufgesetztem Trockenrohr und KPG-Rührer versehenen 10 l-Dreihalskolben gibt man unter einem $N_2$-Gegenstrom der Reihe nach unter gelindem Erwärmen und Rühren 425.0 g PO(O-sec. But)$_3$ und 632.8 g Silicium-Methylat (techn. Qualität). Das Gemisch wird 30 min unter leichtem Sieden gerührt und dann auf RT abgekühlt.

Anschließend tropft man in die homogene Lösung 12 ml konz. HCl in 250 ml Wasser ein. Die Lösung läßt man 10 min aufsieden und zieht anschließend den freiwerdenden Alkohol ab. Währenddessen geliert die Masse. Sie wird in einer Zahnkolloidmühle zerkleinert auf eine Korngröße $< 1.5$ mm unter reichlicher Wasserzugabe. Im Absetzbecken wird das überstehende Wasser nach 24 h Lagerung abgezogen und das weiße Pulver 4 h bei 100 °C getrocknet.

Anschließend wird eine Mischung aus diesem Pulver und einer zerkleinerten Glasfritte mit der Zusammensetzung (Gew.-%) $SiO_2$ 5.00, $B_2O_3$ 10.84, $Al_2O_3$ 10.89, PbO 73.27 im Verhältnis 1 : 4 zubereitet, in einer Kugelmühle 1 h vermahlen und in Platinblechformen von 60 mm Durchmesser und 18 mm Höhe gegeben.

Die Formen werden in einen Tunnelofen mit einem Vorschub von 1 cm/2 min gegeben, der die Temperatur auf einer ersten Strecke von 20 cm linear von Raumtemperatur auf 120° erhöht, sie auf dieser Höhe auf einer zweiten Strecke von 15 cm hält, auf einer dritten Strecke von 1 cm linear auf 420° erhöht, sie dort für eine Strecke von 20 cm hält, dann auf einer Strecke von 8 cm auf 495° ansteigen läßt und anschließend auf 385 mit Gebläse absenkt, dort für eine Strecke von 10 cm hält und dann bis zum Austrag (80°) linear absenkt. In den Pt-Formen liegen Rundscheiben mit 58 mm Ø und 6 mm Höhe und mit einer Dichte von etwa 2,25 $gcm^{-3}$. Eine Glühverlustbestimmung bei 900° an diesem Material zeigt, daß es nach der Tunnelofen-Prozedur noch erhebliche organische Anteile besitzt.

## Beispiel 2

In eine mit Rückflußkühler mit aufgesetztem Trockenrohr und KPC-Rührer versehenen 10 l-Dreihalskolben gibt man unter einem $N_2$-Gegenstrom der Reihe nach unter gelindem Erwärmen und Rühren 375.1 g PO(O-sec But)$_3$, 37,0 g B(OEt)$_3$, 22,9 g Al(OEt)$_3$, 27,5 g Zn(OEt)$_2$ und 53,0 g $CH_3Si(OEt)_3$, entsprechend einer Menge von :

| | |
|---|---|
| 20,0 g | $CH_3SiO_{3/2}$ |
| 8,8 g | $B_2O_3$ |
| 14,4 g | ZnO |
| 7,2 g | $Al_2O_3$ |
| 100,1 g | $P_2O_5$. |

Man rührt das Gemisch unter leichtem Sieden etwa 20 min. Man läßt abkühlen und gibt unter Rühren 56,0 g NaCl und 31,3 g KCl, in 1,6 l $H_2O$ gelöst, während 20 min hinzu. Anschließend tropft man in die homogene Lösung 5 ml konz. HCl in 100 ml Wasser ein. Die Lösung läßt man 1 h lang schwach aufsieden und zieht dann während einiger Stunden das Lösungsmittel ab.

Das Reaktionsgemisch überführt man dann in eine große Aufdampfschale (40 cm Ø) und läßt es dort an der Luft 48 h stehen. Daraufhin kratzt man das Gel von der Schale ab und überführt es durch Mörsen in

ein Pulver. Dieses schlämmt man in 500 ml mit 5 ml konz. HCl auf und läßt es 48 h in der Aufdampfschale unter dem Abzug trocknen. Diese Prozedur wiederholt man mehrere Male.

Das Produkt wird nun 6 h auf 120° erwärmt, und der restliche Alkohol wird unter Vakuum abgezogen. Innerhalb von 6 h wird auf 420° erwärmt. Es bilden sich Gelkügelchen, die bei weiterem Erwärmen auf 520° für 1 h zusammenbacken und eine kompakte Masse ergeben, die eine schwache Trübung und wenig Blasen nach Abkühlung auf Raumtemperatur zeigt. Die Dichte des Materials liegt bei 2.32 $gcm^{-3}$; das Material kann gesägt, gefräst, geläppt und poliert werden. Organische Anteile lassen sich über FIR-Messungen zusammen mit Raman-Spektroskopie nachweisen.

(Siehe Tabelle 1 Seite 8 f.)

Tabelle 1 : Beispiele für Grundglaszusammensetzungen in Gewichtsprozent

| Bsp. / Oxid | A | B | C | D | E | F | G | H | J | K | L | M | N |
|---|---|---|---|---|---|---|---|---|---|---|---|---|---|
| $SiO_2$ | 36,1 | 66,1 | 34,3 | 18,8 | 70,2 | 59,8 | 59,6 | 48,6 | 48,8 | 61,9 | - | 80,9 | 30,9 |
| $B_2O_3$ | 9,7 | 3,7 | 9,2 | 49,3 | 11,2 | - | 12,3 | 17,4 | 12,1 | 3,8 | 4,9 | 12,7 | 50,3 |
| $P_2O_5$ | 1,0 | - | - | - | - | - | - | - | - | - | 55,6 | - | - |
| $Li_2O$ | 0,1 | - | 0,1 | 2,0 | - | - | 9,9 | - | 7,2 | 3,9 | - | - | - |
| $Na_2O$ | - | 6,0 | 0,3 | 1,2 | 9,5 | 7,0 | 2,8 | 2,2 | 0,6 | 5,9 | 16,5 | 3,6 | 10,2 |
| $K_2O$ | - | 13,0 | 0,15 | 0,8 | 7,3 | 11,5 | - | 12,0 | 5,6 | 6,5 | 11,0 | 0,6 | 4,2 |
| MgO | - | - | 0,6 | - | 1,0 | - | 4,2 | - | 5,6 | - | - | - | - |
| CaO | 2,5 | 3,0 | - | 4,5 | 0,2 | - | 4,5 | - | 1,8 | 7,0 | - | - | - |
| SrO | - | - | 0,5 | - | - | - | - | - | - | - | - | - | - |
| BaO | 28,7 | - | 41,3 | - | - | - | - | - | - | - | - | - | - |
| ZnO | 0,2 | 8,0 | 6,8 | 2,8 | - | 21,6 | - | - | - | - | 8,0 | - | - |
| $Al_2O_3$ | - | - | 1,0 | 11,4 | - | - | 1,5 | 13,4 | 3,5 | 1,4 | 3,0 | 2,2 | 4,4 |
| $La_2O$ | 17,8 | - | - | 0,7 | - | - | - | - | - | - | - | - | - |
| $ZrO_2$ | 3,9 | - | 5,7 | 1,1 | - | - | 0,5 | - | 4,2 | - | - | - | - |
| $TiO_2$ | - | - | - | 5,3 | 0,5 | - | 6,6 | - | 4,8 | 9,5 | - | - | - |
| $Nb_2O_5$ | - | - | - | 2,0 | - | 0,2 | 0,7 | - | 5,8 | - | - | - | - |
| F | - | - | - | - | - | - | - | 6,4 | - | - | - | - | - |
| $\frac{NW}{NB}$ | 1,16 | 0,43 | 1,25 | 0,26 | 0,23 | 0,67 | 0,42 | 0,22 | 0,55 | 0,49 | 0,55 | 0,05 | 0,17 |

**Patentansprüche**

1. Glasähnliches Material mit einem dreidimensionalen anorganischen Netzwerk aus Netzwerkbildern (NB), das teilweise durch Netzwerkwandler (NW) unterbrochen ist, dadurch gekennzeichnet, daß das Gew.-Verhältnis V = NW/NB = 0,02 bis 1,30, und daß dieses Netzwerk organische Reste metallorganisch gebunden enthält, wobei die eingebauten organischen Reste nicht größer als die Wellenlänge des sichtbaren Lichtes sind und gleichmäßig über das gesamte Material verteilt sind und wobei ein Teil der nicht abgesättigten Bindungen dieses Netzwerks durch diese organischen Reste abgesättigt ist.

2. Material nach Anspruch 1, dadurch gekennzeichnet, daß dieses Netzwerk aus Silizium-Sauerstoff oder Bor-Sauerstoff- oder Zinn-Sauerstoff- oder Phosphor-Sauerstoff-Polyedern oder aus Gemischen davon besteht.

3. Material nach Anspruch 1 oder 2, dadurch gekennzeichnet, daß die organischen Reste $—CH_3$, $—CH_2X$, $—CHX_2$, (X = Halogen, —OH bzw. = O),

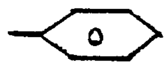 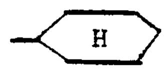 oder 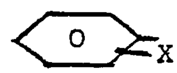

sind.

4. Material nach Anspruch 1 oder 2, dadurch gekennzeichnet, daß es an seiner Oberfläche weitere organische oder anorganische Reste gebunden enthält.

5. Material nach Anspruch 1 oder 2, dadurch gekennzeichnet, daß das anorganische Netzwerk aus folgenden Komponenten in Gew.-% aufgebaut ist :

| | |
|---|---|
| $MO_2 + M_2O_3$ | 35 bis 99 |
| MO | 0 bis 30 |
| $M_2O$ | 2 bis 25 |
| $M_2O_5$ | 0 bis 20. |

6. Verfahren zur Herstellung von Material gemäß den Ansprüchen 1-5, dadurch gekennzeichnet, daß niedermolekulare Copolykondensate der Formel

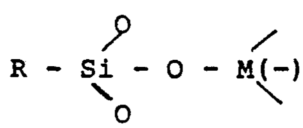

(mit M = B, Sn, Al, P oder Ti und mit R als organischer Rest) als Ausgangsmaterialien hergestellt werden, daß zu diesen Ausgangsmaterialien Salze von Monoorganokieselsäuren der Formel $R—(SiO_3)H_3$ in wässriger alkoholischer Lösung und/oder Alkoholate, Acetate oder andere Salze von weiteren Netzwerkwandlern und Netzwerkbildnern zugegeben werden, und daß das Gemisch durch eine Polykondensation in ein Gel übergeführt wird, das anschließend durch thermische Behandlung und unter Druck weiterverarbeitet wird.

7. Verfahren zur Herstellung von Material nach Anspruch 6, dadurch gekennzeichnet, daß frisch dargestellte polymere Silesquioxane mit Lewissäuren oder Alkalien zu niedermolekularen Einheiten depolymerisiert werden, daß diese dann mit weiteren Netzwerkwandlern und Netzwerkbildnern in Form von Oxiden oder Alkoholaten, Acetaten oder Salzen versetzt werden, und daß das Gemenge dann unter thermischer Behandlung weiterverarbeitet wird.

8. Verfahren nach Anspruch 6, dadurch gekennzeichnet, daß Salze von Monoorganokieselsäuren der Formel $R—SiO_3M_{3/x}$ (M = Alkalimetall mit x = 1 oder Erdalkalimetall mit x = 2) mit Oxiden von Netzwandlern und Netzwerkbildnern umgesetzt und weiterverarbeitet werden, oder mit Alkoholaten, Acetaten oder Salzen von weiteren Netzwerkbildnern und Netzwerkwandlern in alkoholischer Lösung versetzt, hydrolysiert und in einer Kondensation in ein Gel übergeführt werden, dass weiterverarbeitet wird.

9. Verfahren nach Anspruch 6, dadurch gekennzeichnet, daß niedermolekulare sphärocyclische Silesquioxane der Formel $(RSiO_{3/2})_{6,8}$ unter Si-O-Bindungsaufspaltung durch Zusatz von Lewissäuren, Basen oder Salzen der Formel $R—SiO_3M_{3/x}$, (M = Alkalimetall mit x = 1 oder Erdalkalimetall mit x = 2) mit weiteren Glaskomponenten in Form von Oxiden oder Alkoholaten in alkoholicher Lösung umgesetzt werden, wobei in einem Zwischenschritt Hydrolyse und Kondensation des Materials erfolgt.

10. Verfahren nach Anspruch 6, dadurch gekennzeichnet, daß Alkoxy- oder Acetoxymonoorganosilane, in denen ein oder zwei der drei siliciumfunktionellen Substituenten durch Halogen oder andere Substituenten ersetzt sein können, durch Hydrolyse und Cokondensation mit Alkoholaten, Acetaten oder Salzen weiterer Netzwerkwandler und Netzwerkbildner in alkoholischer oder wässrig-alkoholischer Lösung in ein Gel übergeführt werden, daß weiterverarbeitet wird.

11. Verfahren nach Anspruch 6, dadurch gekennzeichnet, daß dieses Material an seiner Oberfläche

modifiziert wird, indem weitere organische oder anorganische Gruppen durch chemische Reaktionen eingeführt werden.

12. Verfahren nach Anspruch 11, dadurch gekennzeichnet, daß diese chemischen Reaktionen radikalische Reaktionen an in dem Material enthaltenen Silesquioxan-Einheiten sind.

13. Verfahren nach Anspruch 11, dadurch gekennzeichnet, daß diese Reaktionen $S_N$- und/oder $S_e$-Reaktionen sind.

**Claims**

1. Glass-like material with a three-dimensional inorganic network of network forming agents (NB) which is partly interrupted by network changing agents (NW), characterized in that the weight ratio V = NW/NB is 0,02 to 1,30, and that the network contains organically bonded organic radicals, the built-in organic radicals being not larger than the wavelength of visible light and being uniformly distributed across the whole material, part of the non-saturated bonds of the network being saturated by the organic radicals.

2. Material according to claim 1, characterized in that the network consists of silicon-oxygen- or boron-oxygen- or tin-oxygen- or phosphorus-oxygen-polyeders or mixtures thereof.

3. Material according to claims 1 or 2, characterized in that the organic radicals are $—CH_3$, $—CH_2X—CHX_2$, (X = halogen, —OH, or = O),

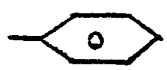 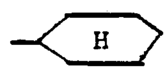 or 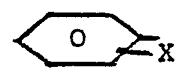

4. Material according to claims 1 or 2, characterized in that it contains further organic or inorganic radicals bonded in its surface.

5. Material according to claims 1 or 2, characterized in that the inorganic network is composed of the following components, in weight per cent :

| | |
|---|---|
| $MO_2 + M_2O_3$ | 35 to 99 |
| MO | 0 to 30 |
| $M_2O$ | 2 to 25 |
| $M_2O_5$ | 0 to 20, |

(M = B, Sn, Al, P or Ti).

6. Method for preparing the material according to claims 1 to 5, characterized in that low-molecular co-polycondensates of the formula

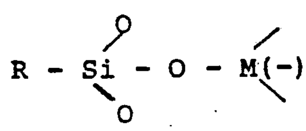

(M = B, Sn, Al, P or Ti, R = inorganic radical) are prepared as starting materials, salts of monoorganosilicacids of the formula $R—(SiO_3)H_3$ in aqueous alcoholic solution and/or alcoholates, acetates or other salts of further network changing agents and network forming agents are added to the starting materials, the mixture is reacted by polycondensation to form a gel which subsequently is processed further by thermal treatment at pressure.

7. Method for preparing material according to claim 6, characterized in that freshly prepared polymeric silesquioxanes are de-polymerized with lewis acids or alkalines to form low-molecular units, that the latter are than intermixed with further network changing agents and network forming agents in the form of oxides or alcoholates, acetates or salts, and that the mixture is then processed further while being thermally treated.

8. Method according to claim 6, characterized in that salts of mono organo silicid acids of the formula $R—SiO_3M_{3/x}$ (M = alkalimetal with x = 1, or alkaline earth metal with x = 2) are reacted with oxides of network changing agents and network forming agents and are processed further, or are intermixed with alcoholates, acetates or salts of further network forming agents or network changing agents, hydrolized, and transferred in a condensation, into a gel which is processed further.

9. Method according to claim 6, characterized in that low-molecular spherocyclic silesquioxanes of the formula $(RSiO_{3/2})_{6.8}$ are reacted in alcoholic solution, with the addition of lewis acids, bases or salts of the formula $R—SiO_3M_{3/x}$ (M = alkali metal with x = 1, or alkaline earth metal with x = 2), with further glass components in the form of oxides or alcoholates, hydrolysis and condensation of the material occurring in an intermediate step.

10. Method according to claim 6, characterized in that alkoxy or acetoxy mono organosilanes in

which one or two of the three silicon-functional substituents can be replaced by halogen or other substituents, are transferred into a gel by hydrolysis and co-condensation with alcoholates, acetates or salts, the gel being processed further.

11. Method according to claim 6, characterized in that the material is modified at its surface by introducing further organic or inorganic radicals by chemical reactions.

12. Method according to claim 11, characterized in that the chemical reactions are radicalic reactions at silesquioxane units contained in the material.

13. Method according to claim 11, characterized in that the reactions are $S_N$- or $S_e$-reactions.

**Revendications**

1. Matière vitreuse, présentant un réseau inorganique tridimensionnel constitué de formateurs de réseau (NB), lequel est partiellement interrompu par des modificateurs de réseau (NW), caractérisé en ce que le rapport pondéral V = NW/NB = 0,02 à 1,30, et que ce réseau contient des radicaux organiques fixés par des liaisons organométalliques, les radicaux organiques incorporés n'étant pas plus gros que la longueur d'onde de la lumière visible et étant simultanément répartis sur tout le volume de la matière, une partie des liaisons non saturées de ce réseau étant saturées par ces radicaux organiques.

2. Matière selon la revendication 1, caractérisée en ce que ce réseau est constitué de polyèdres silicium-oxygène, ou bore-oxygène, ou étain-oxygène, ou phosphore-oxygène, ou de mélanges de ces polyèdres.

3. Matière selon la revendication 1 ou 2, caractérisée en ce que les radicaux organiques sont $-CH_3$, $-CH_2X$, $-CHX_2$ (X = halogène, $-OH$ ou = O),

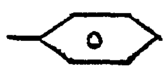 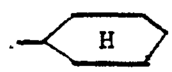 ou 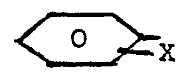

4. Matière selon la revendication 1 ou 2, caractérisée en ce qu'elle contient, fixés sur sa surface, des radicaux organiques ou inorganiques supplémentaires.

5. Matière selon la revendication 1 ou 2, caractérisée en ce que le réseau inorganique est constitué des composants suivants, en % en poids :

| | |
|---|---|
| $MO_2 + M_2O_3$ | 35 à 99 |
| $MO$ | 0 à 30 |
| $M_2O$ | 2 à 25 |
| $M_2O_5$ | 0 à 20. |

6. Procédé pour la fabrication de la matière selon les revendications 1 à 5, caractérisé en ce qu'on prépare des copolycondensats à faible masse moléculaire de formule

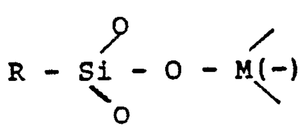

(avec M = B, Sn, Al, P ou Ti, R étant un radical organique) servant de matières de départ, qu'on ajoute à ces matières de départ des sels d'acides monoorganosiliciques de formule $R-(SiO_3)H_3$ dans une solution alcoolique aqueuse et/ou des alcoolates, des acétates ou d'autres sels d'autres modificateurs et formateurs de réseau, et que le mélange est, par une polycondensation, transformé en un gel qui subit une transformation ultérieure par traitement thermique et sous pression.

7. Procédé pour la fabrication de la matière selon la revendication 6, caractérisé en ce que les silasesquioxanes polymères fraîchement préparés sont dépolymérisés par des acides de Lewis ou des alcalis en unités à faible masse moléculaire, que l'on ajoute à ces dernières d'autres modificateurs et formateurs de réseau sous la forme d'oxydes ou d'alcoolates, d'acétates ou de sels, et que le mélange vitrifiable subit ensuite une transformation supplémentaire sous l'action d'un traitement thermique.

8. Procédé selon la revendication 6, caractérisé en ce que des sels d'acides monoorganosiliciques de formule $R-SiO_3M_{3/x}$ (M = métal alcalin si x = 1 ou métal alcalino-terreux si x = 2) sont mis à réagir sur des oxydes de modificateurs de réseau ou de formateurs de réseau, et subissent une transformation ultérieure, ou bien sont additionnés d'alcoolates, d'acétates ou de sels d'autres formateurs et modificateurs de réseau dans une solution alcoolique, hydrolysés et transformés par condensation en un gel, qui subit un traitement ultérieur.

9. Procédé selon la revendication 6, caractérisé en ce qu'on fait réagir des silasesquioxanes sphérocycliques à faible masse moléculaire de formule $(RSiO_{3/2})_{6,8}$, avec dissociation de la liaison Si—O, par addition d'acides de Lewis, de bases ou de sels de formule $R-SiO_3M_{3/x}$ (M = métal alcalin si

x = 1 ou métal alcalino-terreux si x = 2), sur d'autres constituants du verre, sous la forme d'oxydes ou d'alcoolates en solution alcoolique, une hydrolyse et une condensation de la matière se produisant dans une étape intermédiaire.

10. Procédé selon la revendication 6, caractérisé en ce que des alcoxy- ou acétoxy monoorganosilanes, dans lesquels un ou deux des trois substituants silicium-fonctionnels peuvent être remplacés par un halogène ou d'autres substituants, sont, par hydrolyse et co-condensation avec des alcoolates, des acétates ou des sels d'autres modificateurs et formateurs de réseau, en solution alcoolique ou alcoolique-aqueuse, transformés en un gel, lequel subit un traitement ultérieur.

11. Procédé selon la revendication 6, caractérisé en ce que cette matière est modifiée en surface par incorporation d'autres groupes organiques ou inorganiques par des réactions chimiques.

12. Procédé selon la revendication 11, caractérisé en ce que ces réactions chimiques sont des réactions radicalaires appliquées aux motifs silasesquioxanes contenus dans la matière.

13. Procédé selon la revendication 11, caractérisé en ce que ces réactions sont des réactions $S_N$ et/ou $S_e$.